# EUROPEAN PATENT APPLICATION

(11) **EP 1 647 823 A1**
(43) Date of publication of application: **19.04.2006**
(21) Application number: 05022514.3
(22) Date of filing: 14.10.2005
(51) Int. Cl.: G01N 31/22

(54) **Gas detecting sheet**

(30) Priority: 18.10.2004 JP 2004302566
(71) Applicant: RIKEN KEIKI CO., LTD., Itabashi-ku Tokyo (JP)
(72) Inventor: Nakano, Nobuo, Tokyo (JP)
(74) Representative: Zipse + Habersack

(57) **Abstract**

This invention provides a gas detecting sheet, which can detect a plurality of gases at the approximately same time, so as to be able to easily detect which of the gases is leaked, in an environment where the leaks of a plurality of kinds of gases are estimated, and discloses the gas detecting sheet which can measure the concentration of a detection target gas in a environment where an interference gas exists especially. Proper intervals are set for a base plate 2, and a plurality of gas detectors 3 are formed, and the kinds of the target gases to be detected by those gas detectors 3 are made different. This base plate 2 is designed so as to be attachable to and detachable from a gas detecting unit 30 for measuring the gas concentration. Also, when one gas detector 3 is used to detect the detection target gas and the other gas detector is used to detect the interference gas, the detector for the detection target gas determines the total concentration of the detection target gas and the interference gas. Thus, when the concentration value determined by the detector for the interference gas is subtracted from this concentration value, the concentration of the detection target gas is determined.

## Description

### BACKGROUND OF THE INVENTION

### FIELD OF THE INVENTION

This invention relates to a gas detecting sheet that can detect the concentrations of a plurality of kinds of gases existing in an environment at the approximately same time.

### DESCRIPTION OF THE RELATED ART

In association with the expansion of industries, various kinds of toxic substances have been treated in various manufacturing factories. In particular, in the industry related to semiconductors, the sharp expansion increases the kinds of chemical substances to be used, and a large number of substances toxic for a human body are included therein. There is a case that those chemical substances become gaseous and discharged into a work environment, and there is a fear that the concentrations become high, which causes a disaster and an accident. For this reason, the gas concentration in the work environment is required to be monitored, which needs a gas detector. Moreover, it is necessary to discover which of the many kinds of the gases is leaked, at an early stage. Thus, a gas detecting unit that can detect the plurality of kinds of gases at the same time is requested.

The detection of the plurality of kinds of gases can be attained by individually placing the detecting units for detecting the respective gases. However, since the number of the detecting units to be placed is increased, there is a case that they cannot be placed because of an economic reason. Moreover, when the kind of the gas to be detected is changed by the change of the used chemical substance and the like, it is impossible to easily correspond. For this reason, a simple gas detecting unit that can correspond to even the change in the kind of the gas and can detect the plurality of kinds of gases is required.

By the way, the applicant has proposed a portable gas detecting apparatus that is a simple gas detecting unit using a color reaction (refer to Japanese Laid Open Patent Application No.11-181970). This portable gas detecting apparatus includes a gas absorbing device, a measuring head, a driving power source and a signal processor for detecting the change in the optical concentration of the measuring head, and accommodates the measuring head in a case so as to expose it partly from a window. Then, a detecting sheet, which reacts with the inspection gas absorbed by the gas absorbing device and exhibits the color reaction, can be attached to and detached from the measuring head.

Also, the applicant has proposes a gas detecting unit that can carry out a predetermined gas detection for a plurality of detection target gases (Japanese Patent Application No. 2004-164263). This gas detecting unit is provided with: a gas detector body having a head portion where a plurality of gas contacts are formed; an element holder where a plurality of element holding portions for holding tablet type gas detecting elements are installed; and an attaching mechanism where an element holder supporter for detachably supporting this element holder. Then, since the attaching mechanism for supporting the element holder is held by the head portion of the gas detector body, the plurality of tablet type gas detecting elements held by the element holding portion of the element holder are pushed against the gas contacts in the head portion and become at the simultaneously set state.

The portable gas measuring apparatus noted in Japanese Laid Open Patent Application No. 11-181970 as mentioned above is high in convenience when the single gas is detected, however, a plurality of portable gas measuring apparatuses are required in order to detect the plurality of gases at the approximately same time. When the plurality of measuring apparatuses are used to carry out the gas detections at the approximately same time, a plurality of operators for those measuring apparatuses are also required, which results in the necessity of more personnel for the detection works.

Also, the gas detector noted in Japanese Patent Application No. 2004-164263 is designed as follows. That is, the tablet type gas detecting element is held by the element holder. This element holder is detachable from the element holder supporter of the attaching mechanism. Then, the element holder is detached from the element holder supporter, and the proper number of the tablet type gas detecting elements are held by the element holder. After that, this element holder is attached to the element holder supporter. Thus, they are simultaneously set in the gas detector so that the plurality of gases can be detected at the approximately same time. However, the tablet type gas detecting elements corresponding to the gases to be detected are required to be prepared respectively in advance. Thus, when there are many kinds of gases to be detected, the various tablet type gas detecting apparatuses must be prepared, which results in the complex management of those tablet type gas detecting apparatuses. Moreover, after the individual tablet type gas detecting apparatuses are respectively held by the element holder, the element holder is attached to the element holder supporter. Hence, the preparing work for using the gas detector becomes complex.

### SUMMARY OF THE INVENTION

It is therefore a main object of the present invention to provide a gas detecting sheet, which can be easily attached to and detached from a gas detecting unit and is convenient in detecting a plurality of gases at the approximately same time.

Another object of the present invention is to provide the gas detecting sheet, which can detect a detection target gas, when an interference gas exists, because the plurality of gases can be detected at the approximately same time.

As the technical means to attain the objects mentioned above, a gas detecting sheet according to the present invention is characterized in that a plurality of gas detectors are placed on a single base plate, and the plurality of gas detectors detect the concentrations of different gases.

That is, when this base plate is used for the gas detection, the plurality of gas detectors are placed in the environment at the same time. Thus, the plurality of gases can be detected at the approximately same time. By the way, the gas detectors may be the type where each of them detects the different gas, or may be the type where, for example, when the six gas detectors are provided, each two of them detect the same gas so that the three kinds of the gases are detected.

Also, the gas detector is allowed to be formed by coating the reactant, such as a color coupler, a chemicals where an optical concentration is changed, and the like, on a predetermined position of a base, which is made of paper and has a predetermined dimension, serving as the base plate. In this case, this is the detector combined correspondingly to the detection target gas to be estimated. Then, the gas detector is attached to and detached from the gas detecting apparatus together with the base plate.

Also, the gas detecting sheet according to the present invention of the claim 2 is characterized in that the gas detector, when the detection target gas is brought into contact with it, exhibits the color or exhibits the reaction of the change in the optical concentration.

When the gas detector is brought into contact with the gas serving as the detection target, the color is generated, or the optical concentration is changed. Thus, the existence of the detection target gas is detected, and the concentration of the detection target gas is measured in accordance with the color generation or the changed concentration.

Also, the gas detecting sheet according to the present invention of the claim 3 is characterized in that the gas detector is attachable to and detachable from the base plate.

The gas detector is designed so as to be attachable to and detachable from the base plate. As mentioned above, the type where the detector is formed by coating the reactant, such as the color coupler and the like, on the base plate can easily set to the gas detecting apparatus. However, when the shape of the base plate or the like can be specified correspondingly to the gas detector, the detection target gas is fixed. Thus, this cannot easily cope with the case where the target gas to be detected is changed due to the change of chemical substance to be used. With regard to this point, when the gas detector can be attached to and detached from the base plate, it is possible to easily cope with the change in the target gas.

Also, the gas detecting sheet according to the present invention of the claim 4 is characterized in that one detector of the gas detectors is the detector for detecting the interference gas with the detection target gas detected by another detector.

Depending on the detection target gas, when it exists singly, there is the reactant that enables the measurement of the concentration. However, under the environment where the interference gas with the detection target gas exists together, the use of the reactant may result in the measurement of the total concentration of the detection target gas and the interference gas. In this case, when there is the reactant that enables the measurement of the concentration of the interference gas, combining them can measure the concentration of the detection target gas. That is, by subtracting the concentration of the interference gas from the concentration determined from the reactant of the detection target gas, where they are detected at the approximately same time, it is possible to determine the concentration of only the detection target gas.

Also, the gas detecting sheet according to the present invention of the claim 5 is characterized in that the detection target gas is an acetaldehyde, and the interference gas is a formaldehyde.

That is, under the environment where the acetaldehyde and the formaldehyde exist together, there is no reactant that enables the measurement of the concentration of only the acetaldehyde. However, under that environment, there is the reactant that enables the measurement of the concentration of only the formaldehyde. For this reason, the detector including those reactants is placed in the detecting sheet, and the concentrations of those detectors are measured at the approximately same time under that environment. Then, measuring the difference between the measurement value of the concentration of the acetaldehyde and the measurement value of the concentration of the formaldehyde can determine the concentration under that environment of the acetaldehyde.

Also, the gas detecting sheet according to the present invention of the claim 6 is characterized in that the detection target gas is a glutaraldehyde, and the interference gas is the formaldehyde.

As for the glutaraldehyde, similarly to the case of the acetaldehyde, under the environment of the joint existence of the formaldehyde, there is no reactant that enables the measurement of only the glutaraldehyde. For this reason, by placing the detector including those reactants in the detecting sheet and then measuring the concentrations of those detectors at the approximately same time under that environment, it is possible to determine the concentration under that environment of the glutaraldehyde.

Also, the gas detecting sheet according to the present invention of the claim 7 is characterized in that the detection target gas is a weak acid gas, and the interference gas is a strong acid gas.

As for the reactant that enables the detection of the concentration of the weak acid gas, under the joint existence of the strong acid gas, there is the type to measure the concentration including the strong acid gas. Even in the case of using such a reactant, combining and using the reactants that enable the measurement of the concentration of only the strong acid gas, the concentration of the weak acid gas can be measured.

Also, the gas detecting sheet according to the present invention of the claim 8 is characterized in that the weak acid gas serving as the detection target gas reacts with a methyl red, and the strong acid gas serving as the interference gas reacts with a methanyl yellow.

That is, the methyl red and the methanyl yellow are used for the reactant. Under the environment where the weak acid gas reacting with the methyl red and the strong acid gas reacting with the methanyl yellow exist, the concentration value measured through the methyl red includes the concentration of the strong acid gas. Thus, when the concentration measurement value of the strong acid gas is subtracted from the concentration measurement value of the weak acid gas, the concentration of the single weak acid gas is determined.

Also, the gas detecting sheet according to the present invention of the claim 9 is characterized in that the gas detecting sheet is attachable to and detachable from a head portion of a gas detector body having the head portion where a plurality of gas contacts are formed, and at a time of attachments, each of the detectors is pushed against the gas contact, while each facing it.

This detecting sheet is designed so as to be attachable to and detachable from the gas detector. For example, when the base plate of the detecting sheet is produced by using a rectangular base paper, a holding portion for holding the edges of the three sides of this base plate is provided, thereby enabling the detachment so that it is removed from a portion where the holding portion is not formed. Then, the gas in the environment is inserted into and brought into contact with this gas detector.

### BRIEF DESCRIPTION OF THE DRAWINGS

Fig. 1 is a perspective view showing a schematic appearance of a gas detecting sheet according to the present invention;
Fig. 2 is a perspective view explaining a principle of a gas detector for detecting a gas concentration in accordance with the gas detecting sheet according to the present invention;
Fig. 3 is a schematic block diagram of the gas detector shown in Fig. 2;
Fig. 4 is a perspective view showing an example of a gas detector suitable for a use of the gas detecting sheet according to the present invention, and an appearance view showing a portable gas detector; and
Fig. 5 is a list table of a weak acid detection target gas and a strong acid interference gas and shows a case that a reactant is methyl red and methanyl yellow.

### DETAILED DESCRIPTION OF THE EMBODIMENTS

A gas detecting sheet according to the present invention will be described concretely in accordance with the illustrated preferable embodiment.

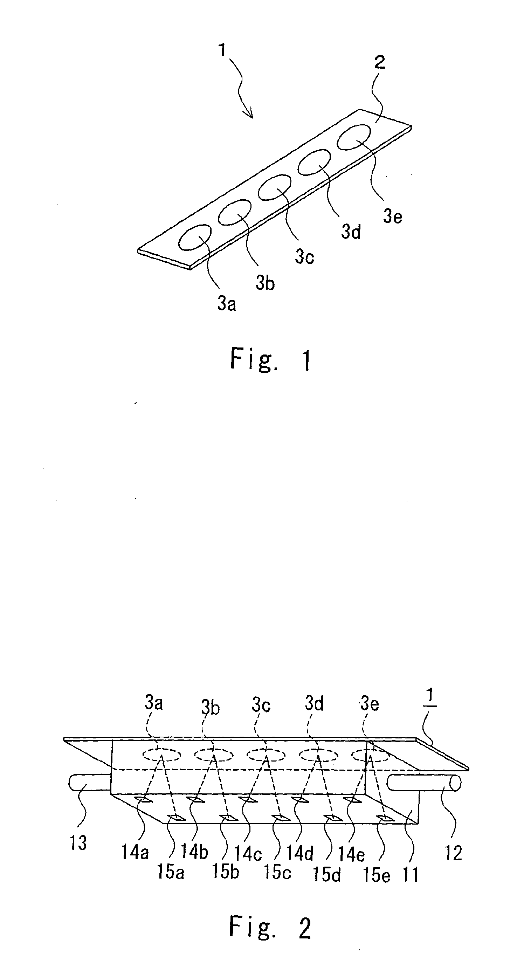

Fig. 1 is a perspective view of a gas detecting sheet 1 according to the present invention. On a rectangular base plate 2, gas detectors (3a, 3b, 3c, 3d, and 3e) are placed at five positions at approximately same intervals in the longitudinal direction of the base plate 2. Those gas detectors 3a, 3b, 3c, 3d, and 3e are designed so as to detect different kinds of gases, respectively. By the way, for example, in such a way that the gas detectors 3a and 3b detect one kind of gas, the gas detectors 3c and 3d detect another kind of gas, and the gas detector 3e detects still another kind of gas, depending on a case, the plurality of gas detectors 3 are allowed to detect the same kind of the gas.

In the gas detector 3, a reactant, such as a color coupler which reacts with a target gas and generates a color, or a chemicals where an optical concentration is changed, and the like, is impregnated into cellulose constituting the base plate 2, or a base paper is used for the base plate 2, and it is coated on the surface.

Fig. 2 is a perspective view explaining the schematic structure of the detecting portion of the detector for detecting the gas by using this gas detecting sheet 1 when it is viewed from below. This includes a sampling chamber 11 constituting the gas detector body into which an inspection gas in an environment to be detected is introduced. The inspection gas is introduced from an introduction tube 12 and exhausted from an exhaust tube 13. A head portion (not shown) is placed in this sampling chamber 11, and the gas detecting sheet 1 is designed so as to be attachable to and detachable from the head portion. Also, a gas contact (not shown) is placed in the head portion. In a situation that the gas detecting sheet 1 is attached, each of the gas detectors 3 is located so as to face the corresponding gas contact, and the gas detector 3 is exposed inside the sampling chamber 11.

Light sources 14 (14a, 14b, 14c, 14d and 14e) such as LED (Light Emitting Diode) and the like, and light receiving elements 15 (15a, 15b, 15c, 15d and 15e) such as photo diodes and the like are installed in the sampling chamber 11. Light emitted from each of the light sources 14 is reflected on each of the gas detectors 3 and inputted to the corresponding light receiving element 15.

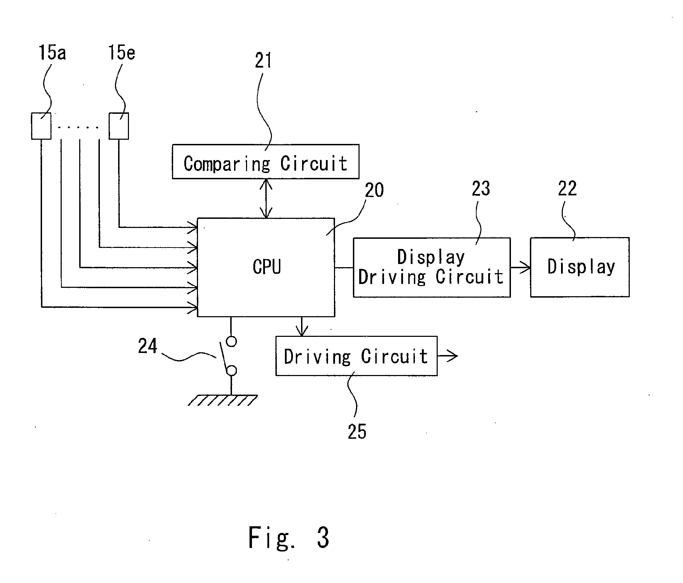

Then, Fig. 3 is a block diagram of a schematic measurement relation of the gas detector for measuring the gas concentration detected by the gas detecting sheet 1. This is configured with a CPU 20 as a center. An output signal of the light receiving element 15 is inputted to this CPU 20. A comparing circuit 21 is connected to this CPU 20. The information with regard to the measurement concentration of the detection gas inputted from the light receiving element 15 is sent to the comparing circuit 21. The comparing circuit 21 stores a calibration curve preliminarily obtained about the concentration of the detection target gas, and compares with the measurement concentration information of the detection gas, determines the concentration of the detection gas and sends the concentration information to the CPU 20.

Also, a display driving circuit 23 for driving a display 22 is connected to the CPU 20. A driving signal is sent to the display driving circuit 23. A. main switch 24 is connected to this CPU 20. When this is closed, it is started, and the driving signal is outputted to a driving circuit 25. A suction blower (not shown) connected to the exhaust tube 13 is connected to the driving circuit 25. The driving of the suction blower causes the gas in the environment to be absorbed and introduced through the introduction tube 12 to the sampling chamber 11.

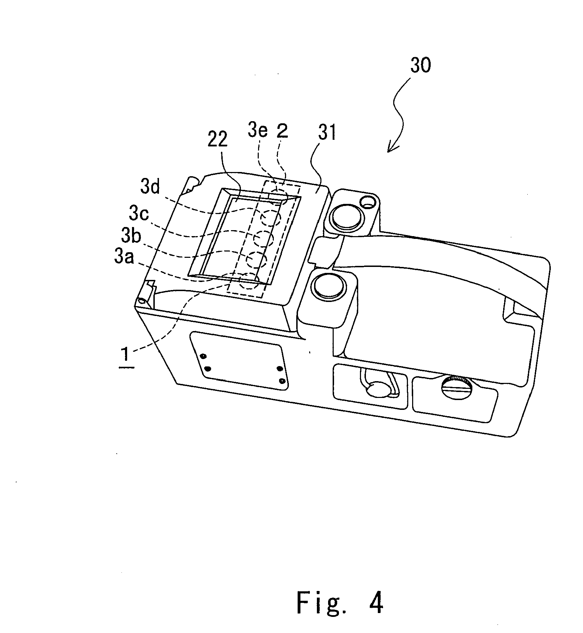

Fig. 4 is an appearance view showing a portable gas detecting unit 30 suitable for the use of this gas detecting sheet 1. Since the display 22 is exposed on the top surface, its displayed content can be checked. This display 22 is exposed on the surface of a cover 31 placed in front of the gas detecting unit 30 so as to be opened or closed. The gas detector body, such as the sampling chamber 11, the head portion and the like, are placed below this cover 31. Also, as indicated by dashed lines on Fig. 4, the gas detecting sheet 1 is designed so as to be able to be set in the rear of the cover 31 or the exposed head portion, in the situation that this cover 31 is opened.

As for the embodiment according to the gas detecting sheet 1 in the present invention as configured above, the action thereof will be described below.

For example, this gas detecting sheet 1 is set in the portable gas detecting unit 30 shown in Fig. 4, and the gas detecting unit 30 is driven. Thus, the gas in the environment is introduced into the gas chamber 11, and the introduced gas is brought into contact with the gas detector 3 of the gas detecting sheet 1. In the case of the existence of the detection target gas, each gas detector 3 reacts with it and generates a color, or an optical concentration is changed. Light is emitted from the light source 14 to the gas detector 3, and its reflection light is captured by the light receiving element 15. In the gas detector 3, the color generation degree is different depending on the concentration of the detection gas. Thus, the magnitude of the reflection light becomes the value corresponding to the concentration. The light receiving element 15 outputs the signal of the information with regard to this measurement concentration.

When the signal outputted from the light receiving element 15 is inputted to the CPU 20, the signal with regard to the light receiving element 15 from which the signal is outputted and the signal with regard to the measurement concentration are sent to the comparing circuit 21. The comparing circuit 21 compares the pre-stored calibration curve and this measurement concentration and determines the concentration of the detected gas. This determined concentration is sent to the CPU 20. Then, the CPU 20 sends the driving signal to the display driving circuit 23, and the concentration of the detection gas is displayed on the display 22.

The five gas detectors 3a, 3b, 3c, 3d, and 3e are placed in the gas detecting sheet 1. Thus, by making the reactants of those gas detectors 3 different, it is possible to detect the five kinds of the gases. When the gas detecting unit 30 to which this gas detecting sheet 1 is attached is used to measure the gas concentration, the change in the kind of the gas to be detected can be carrying out, for example, when a gas selection switch is set in the gas detecting unit 30 so that a measurer operates the selection switch, or when a measuring order is defined in advance so that the CPU 20 sends an instruction with regard to the kind of the gas to be detected to the light receiving element 15. Or, the measuring processes for all of the gas concentrations may be executed in parallel. In this case, when the display 22 is the type of displaying the single gas concentration, the measurement concentration is stored in a memory, and a switching button or the like is used to read it from the memory. Then, the target gas to be displayed can be designed so as to be selected.

Also, the gas detector 3 formed in this gas detecting sheet 1 may be formed by the reactant corresponding to the detection target gas pre-assumed for the corresponding environment. Then, the gas detector 3 whose number corresponds to the number of the kinds of the detection target gas may be formed. Moreover, since the base plate 2 is defined as a formal shape, even if the detection target gas is different, the gas detecting sheet 1 can be attached to the same gas detecting unit 30. By the way, in order that the kind of the detection target gas can be set for the CPU 20, for example, this is designed such that an operating unit for setting the detection target gas is installed for the gas detecting unit 30 so that the kind can be set for the CPU 20 in accordance with the kind of the gas that is expected in advance.

Moreover, when the number of the gas detectors 3 is set to be equal to the number of the gas contacts of the gas detecting unit 30, this is preferable because the attachment and detachment of the gas detecting sheet 1 become easy. However, the gas detector 3 facing the gas contact can be changed by setting the number of the gas detectors 3 to be greater than the number of the gas contacts, or depending on a case, by changing the position of the gas detecting sheet 1 with respect to the gas detecting unit 30. For example, it is designed to set the gas detecting sheet 1 having the five gas detectors 3 in the gas detecting unit 30 having the three gas contacts so that the desirable gas detector 3 faces the gas contact, correspondingly to the gas to be detected. By the way, the head portion of the gas detecting unit 30 should have the structure so that even if the position of the gas detecting sheet 1 is different, it can be surely held and it can surely face the gas contact. The design of such structure becomes convenient especially when the gas detecting unit 30 having the single gas contact is used to detect the plurality of kinds of gases.

Then, in this gas detecting sheet 1, by paying attention to the fact that the plurality of kinds of gas concentrations can be detected at the approximately same time, it is possible to measure the concentration of the detection target gas in the environment where the detection target gas and its interference gas exist. That is, in the case of the existence of the interference gas with the detection target gas, there is a case that the use of the reactant for the detection target gas can measure only the total concentration of the detection target gas and the interference gas. However, even if the use of the foregoing reactant, if the concentration of the interference gas can be measured, the concentration of the detection target gas can be determined. For example, the case that the mixture gas of a detection target gas A and an interference gas B exists is the case that the use of the reactant for A results in the measurement of the concentration including both of the detection target gas A and the detection target gas B (the total concentration of the gas A and the gas B) and that the use of the reactant for B enables the single measurement of the concentration of the interference gas B.

### [First Embodiment]

In the mixture gas where formaldehyde and acetaldehyde exist, the formaldehyde is the interference gas with the acetaldehyde. Thus, in the reactant to measure the concentration of the acetaldehyde, the total concentration of the acetaldehyde and the formaldehyde is measured. On the other hand, in the existing reactant to measure the formaldehyde, only the concentration of the formaldehyde can be measured even in this mixture gas. So, one gas detector 3a of the gas detecting sheet 1 according to the present invention is formed by the reactant to measure the formaldehyde, and the other gas detector 3b is formed by the reactant to measure the acetaldehyde.

Then, when this gas detecting sheet 1 is used to measure the concentration of the mixture gas of the formaldehyde and the acetaldehyde, the gas detector 3b determines the total concentration of the acetaldehyde and the formaldehyde. On the other hand, the gas detector 3a determines the concentration of the formaldehyde. Thus, by determining the difference between the concentration value determined by the gas detector 3b and the concentration value determined by the gas detector 3a, it is possible to determine the concentration of the acetaldehyde in the mixture gas.

### [Second Embodiment]

Even in a mixture gas where formaldehyde and glutaraldehyde exist, the formaldehyde is the interference gas with the glutaraldehyde. Thus, in the reactant to measure the concentration of the glutaraldehyde, the total concentration of the glutaraldehyde and the formaldehyde is measured. On the other hand, in the existing reactant to measure the formaldehyde, only the concentration of the formaldehyde can be measured even in this mixture gas. So, one gas detector 3a of the gas detecting sheet 1 according to the present invention is formed by the reactant to measure the formaldehyde, and the other gas detector 3b is formed by the reactant to measure the glutaraldehyde.

Then, when this gas detecting sheet 1 is used to measure the concentration of the mixture gas of the formaldehyde and the glutaraldehyde, the gas detector 3b determines the total concentration of the glutaraldehyde and the formaldehyde. On the other hand, the gas detector 3a determines the concentration of the formaldehyde. Thus, by determining the difference between the concentration value determined by the gas detector 3b and the concentration value determined by the gas detector 3a, it is possible to determine the concentration of the glutaraldehyde in the mixture gas.

### [Third Embodiment]

For example, in a case of a mixture gas of hydrogen fluoride gas (HF) and hydrogen chloride gas (Hcl), the strong acid hydrogen chloride gas is the interference gas with the weak acid hydrogen fluoride gas. Thus, one gas detector 3a of the gas detecting sheet 1 is formed by a reactant to measure the concentration of the hydrogen chloride gas, and the other gas detector 3b is formed by a reactant to measure the concentration of the hydrogen fluoride gas. When this gas detecting sheet 1 is used to measure the concentration of the mixture gas of the hydrogen fluoride and the hydrogen chloride, the gas detector 3b determines the total concentration of the hydrogen fluoride and the hydrogen chloride. Also, the gas detector 3a determines the concentration of the hydrogen chloride. Thus, by determining the difference between the concentration value determined by the gas detector 3b and the concentration value determined by the gas detector 3a, it is possible to determine the concentration of the hydrogen fluoride in the mixture gas.

### [Fourth Embodiment]

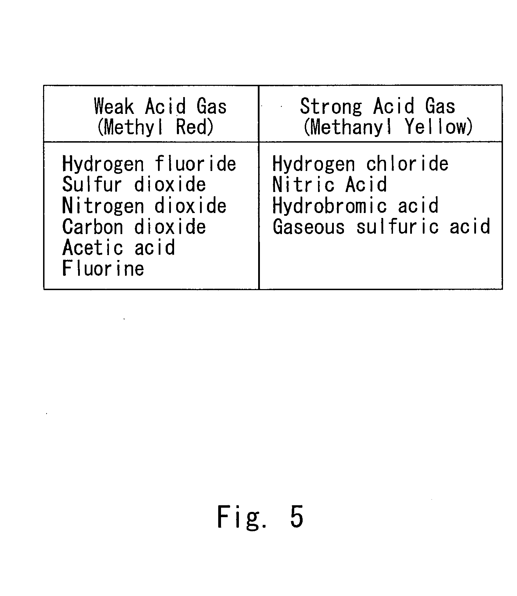

The third embodiment exemplifies the hydrogen fluoride gas as the weak acid gas, and the hydrogen chloride gas as the strong acid gas. However, in a case where the strong acid gas reacting with the methanyl yellow mixes as the interference gas, the concentration of the detection target gas can be measured with the weak acid gas reacting with the methyl red as the detection target gas. That is, in the list table shown in Fig. 5, when respective gases in a strong acid gas column serve as interference gases and mix with respective gases in a weak acid gas column, the concentration of the strong acid gas is measured in the methanyl yellow, and the total concentration of the strong acid gas and the weak acid gas is measured in the methyl red. Thus, the difference between the concentration value determined in the methyl red and the concentration value determined in the methanyl yellow indicates the concentration value of the weak acid gas in the mixture gas.

By the way, in the list table of Fig. 5, carbon dioxide and fluorine in the weak acid gas column react with the methyl red in dissolved states. That is, the concentration can be measured for the gas that does not exhibit the acidity at a normal state but reacts after the dissolution.

The operation for determining the difference between the concentrations in the above-mentioned first to fourth embodiments can be carried out by the CPU 20. That is, in accordance with the concentration information detected by the light receiving element 15, the comparing circuit 21 may determine the respective concentration values, and the operational circuit of the CPU 20 may determine the difference. Then, the value can be displayed on the display 22.

Also, in those first to fourth embodiments, the mixture gas of the formaldehyde and the acetaldehyde or the glutaraldehyde, and the mixture gas of the weak acid gas, such as the hydrogen fluoride and the like, and the strong acid gas, such as the hydrogen chloride and the like are exemplified. However, of course, it is not limited to them. That is, in the mixture gas of the detection target gas and the interference gas, when the concentration of the detection target gas is measured, if there is the reactant which enables the measurement of the concentration of the interference gas, this reactant and the reactant which enables the measurement of concentration of the mixture gas may be combined.

## Claims

1. A gas detecting sheet, **characterized in that** a plurality of gas detectors are placed on a single base plate, and
said plurality of gas detectors detect concentrations of different gases.

2. The gas detecting sheet according to claim 1, **characterized in that** said gas detector, when a detection target gas is brought into contact with it, exhibits a color or exhibits a reaction of a change in an optical concentration.

3. The gas detecting sheet according to claim 1 or claim 2, **characterized in that** said gas detector is attachable to and detachable from said base plate.

4. The gas detecting sheet according to one of the preceding claims 1 to 3, **characterized in that** one detector of said gas detectors is the detector for detecting an interference gas with a detection target gas detected by another detector.

5. The gas detecting sheet according to claim 4, **characterized in that** said detection target gas is an acetaldehyde, and said interference gas is a formaldehyde.

6. The gas detecting sheet according to claim 4, **characterized in that** said detection target gas is a glutaraldehyde, and said interference gas is the formaldehyde.

7. The gas detecting sheet according to claim 4, **characterized in that** said detection target gas is a weak acid gas, and said interference gas is a strong acid gas.

8. The gas detecting sheet according to claim 7, **characterized in that** the weak acid gas serving as said detection target gas reacts with a methyl red, and the strong acid gas serving as said interference gas reacts with a methanyl yellow.

9. The gas detecting sheet according to one of the preceding claims 1 to 7, **characterized in that** said gas detecting sheet is attachable to and detachable from a head portion of a gas detector body having said head portion where a plurality of gas contacts are formed, and at a time of attachments, a part or all of the detectors are pushed against said gas contacts, respectively, while facing them.
